# EUROPEAN PATENT APPLICATION

(11) **EP 4 830 979 A1**
(43) Date of publication of application: **28.10.2026**
(21) Application number: 25172022.3
(22) Date of filing: 23.04.2025
(51) Int. Cl.: B60L 50/53, B60L 53/36

(54) **A WORKING MACHINE**

(71) Applicant: Volvo Construction Equipment AB, 631 85 Eskilstuna (SE)
(72) Inventor: SELANDER, Alexander, 362 98 ÄLMEBODA (SE); TIGER, Daniel, 360 51 HOVMANTORP (SE); KVIST, Roland, 360 42 BRAÅS (SE)
(74) Representative: Kransell & Wennborg KB

(57) **Abstract**

A working machine (100) configured for repetitive cyclic operation at a work site (5) equipped with an overhead power line (114), the working machine comprising: a working machine frame structure (102); at least one electric traction machine (130); a rechargeable energy storage system (104) electrically connected to the electric traction machine; a dump body (106) being pivotably mounted to the frame structure by a pivot joint (108), and being arrangeable in a loading state and a pivoted state; a charging interface (110) comprising: a first vehicle-side contactor (110a) mounted on the dump body and configured to establish electrical contact with a charging contactor (116) of the overhead power line when the dump body is arranged in the pivoted state; a second vehicle-side contactor (110b, 210b) electrically connected in series with the rechargeable energy storage system and the first vehicle-side contactor; wherein the charging interface is configured such that the second vehicle-side contactor (110b, 210b) is in an open state when the dump body is in the pivoted state.

## Description

### TECHNICAL FIELD

The disclosure relates generally to working machines. In particular aspects, the disclosure relates to a working machine configured for repetitive cyclic operation at a work site. The disclosure can be applied to working machines and construction equipment, among other vehicle types. Although the disclosure may be described with respect to a particular vehicle, the disclosure is not restricted to any particular vehicle, unless explicitly stated so.

### BACKGROUND

Electrification of heavy-duty working machines, such as dump trucks and other off-highway vehicles, is gaining momentum in an effort to reduce emissions, operating costs, and reliance on fossil fuels. In particular, battery-electric drive systems have become increasingly viable due to improvements in energy density, power electronics, and drive system control.

However, a persistent challenge for battery-electric machines in high-duty, cyclic environments, such as mining, construction, and earthmoving, is maintaining sufficient battery charge without interrupting operations. In such scenarios, machines typically operate along short, repeated loops, with cycle times ranging from a few minutes to several minutes, and distances ranging from a few hundred meters to a few kilometers. Interrupting these cycles to perform charging, even for short durations, can significantly reduce operational productivity and fleet efficiency.

Known charging solutions typically rely on either manual plug-in charging at stationary charging stations or automated robotic connectors. These approaches usually require the working machine to be stationary during charging, which is not optimal in fast-paced, cyclic work site operations. Additionally, such systems may be complex, costly to maintain, or prone to misalignment and wear under heavy-duty conditions.

Moreover, dynamic or opportunity charging methods, such as overhead catenary systems, introduce safety concerns, particularly the risk of electrical arcing when establishing or breaking contact under load. Safe and reliable connection and disconnection are critical for maintaining operator safety and equipment longevity.

Accordingly, there remains a need for a charging solution that enables automatic, efficient, and safe charging of battery-electric working machines without halting the operating cycle, and with reduced reliance on complex sensor systems or actuator-controlled switches.

### SUMMARY

According to a first aspect of the disclosure, a working machine configured for repetitive cyclic operation at a work site equipped with an overhead power line is provided. The working machine comprises: a working machine frame structure; at least one electric traction machine configured to propel the working machine; a rechargeable energy storage system electrically connected to the at least one electric traction machine; a dump body extending from a first end portion to a second end portion and being configured to receive and dump a payload, and being pivotably mounted to the frame structure at the first end portion by a pivot joint, and being arrangeable in: a loading state, in which the second end portion of the dump body rests on the frame structure; and a pivoted state, in which the second end portion is raised relative to the frame structure by pivoting the dump body about the pivot joint; a charging interface comprising: a first vehicle-side contactor mounted on the dump body and configured to establish electrical contact with a charging contactor of the overhead power line when the dump body is arranged in the pivoted state; a second vehicle-side contactor arranged distant to the first vehicle-side contactor and being electrically connected in series with the rechargeable energy storage system and the first vehicle-side contactor; wherein the charging interface is configured such that the second vehicle-side contactor is in an open state when the dump body is in the pivoted state, and is closed during or upon return movement of the dump body to the loading state.

The first aspect of the disclosure may seek to solve problems related to maintaining continuous or high-efficiency operation of battery-powered working machines, particularly in cyclic environments such as quarries or construction sites, where frequent stops for charging would reduce productivity. For example, by using the physical position of the dump body as a mechanism for dynamically establishing and interrupting parts of the charging circuit, a particular efficient charging operation can be achieved. Moreover, by the use of two vehicle-side contactors, the first vehicle-side contactor interfacing with the overhead power line and the second vehicle-side contactor completing the vehicle-side charging circuitry, the charging interface can be coordinate in an improved manner. For example, arcing may be reduced as the first vehicle-side contactor may be electrically connected to the overhead power line as the dump body is in the pivoted state, while the second vehicle-side contactor is opened, thereby preventing the vehicle-side charging circuitry to be closed. Thus, it should be understood that a charging current may be provided from the overhead power line to the rechargeable energy storage system provided that the first vehicle-side contactor is electrically connected to the overhead power line, and the second vehicle-side contactor is closed, i.e. by providing a closed vehicle-side charging circuitry from the first vehicle-side contactor, via the second vehicle-side contactor, to the rechargeable energy storage system. Thus, the first vehicle-side contactor is typically connected to the rechargeable energy storage system via the second vehicle-side contactor, and not directly to the rechargeable energy storage system. In other words, in case the second vehicle-side contactor is opened, the vehicle-side charging circuitry is opened and no charging current can be supplied to the rechargeable energy storage system (even if the first vehicle-side contactor is electrically connected to the overhead power line). It should be understood that the first vehicle-side contactor may remain in physical and electrical contact with the charging contactor during or upon return movement of the dump body to the loading state (from the pivoted state in which the first vehicle-side contactor has been connected to the charging contactor). A technical benefit may include at least one of: enabling opportunity charging of the working machine without requiring it to stop by using its existing pivoting action to manage the physical and electrical interface to an overhead power line; reduced risk of arcing; improved control of the charging operation. This may result in improved uptime, reduced infrastructure complexity, and increased energy management reliability.

Optionally in some examples, including in at least one preferred example, the second vehicle-side contactor comprises a first contactor part arranged on the dump body and a second contactor part arranged on the frame structure, the second vehicle-side contactor being configured to be electrically closed when the first and second contactor parts are brought into contact as the dump body is returned to the loading state. A technical benefit may include an efficient and fail-safe mechanical mechanism for ensuring that the second vehicle-side contactor is opened when the dump body is lifted into the pivoted state, and closed automatically when the body returns to its loading state (typically its default position). Hereby, the vehicle-side charging circuitry, at least with regards to the second vehicle-side contactor, may be configured to be controlled without the need for active control or sensor input. In other words, the managing of the second vehicle-side contactor may be passive.

Optionally in some examples, including in at least one preferred example, at least a portion of the second vehicle-side contactor is fixedly mounted to the frame structure. A technical benefit may include structural stability and durability for the second contactor. For example, protecting the second vehicle-side contactor from harsh conditions in the environment may be facilitated. Moreover, if the second vehicle-side contactor comprises two contactor parts as previously described (i.e. a first contactor part arranged on the dump body and a second contactor part arranged on the frame structure), at least the second contactor part is fixedly mounted to the frame structure.

Optionally in some examples, including in at least one preferred example, the working machine further comprises a control unit configured to control the open and closed states of the second vehicle-side contactor. A technical benefit may include enabling active management of the second vehicle-side contactor, at least with regards to opening and closing the contactor. Thus, in addition to, or instead of, arranging the second vehicle-side contactor in two parts as previously described (i.e. a first contactor part arranged on the dump body and a second contactor part arranged on the frame structure), the opening and closing of the second vehicle-side contactor may be actively managed by the control unit. By managing the second vehicle-side contactor by a control unit, diagnostics of the contactor state, and potential integration with safety logic, system readiness checks, or intelligent charging management may be implemented. According to some examples, the control unit is operatively connected to a position sensor or actuator for the dump body. Hereby, the position sensor may be configured to send a signal indicative of the state of the dump body (e.g. loading state and pivoted state), wherein the control unit manages the second vehicle-side contactor in response to the received signal. Hereby, precise control of the contactor based on real-time positional data of the dump body may be provided. However, it should be noted that the active management of the second vehicle-side contactor using the control unit may be combined with the previously described first and second parts of the contactor (i.e. a first contactor part arranged on the dump body and a second contactor part arranged on the frame structure). For example, the second vehicle-side contactor may comprise a primary contactor being the first and second contactor part and a secondary contactor arranged in series with the primary contactor, wherein the control unit may be configured to receive a signal indicative of contact between the first and second contactor parts (as the dump body is returned from the pivoted state to the loading state), and in response of such signal instruct the second vehicle-side contactor to close (e.g. by closing a secondary contactor of the second vehicle-side contactor). Hereby, the advantages of the passive and active management of the second vehicle-side contactor may be combined.

Optionally in some examples, including in at least one preferred example, the control unit is configured to: maintain the second vehicle-side contactor in an open state while the first vehicle-side contactor is brought into electrical contact with the charging contactor; and close the second vehicle-side contactor during or upon return movement of the dump body from the pivoted state to the loading state. A technical benefit may include controlled and safe sequencing of electrical contact. Alternatively, in case the opening and closing of the second vehicle-side contactor is managed by a control unit as previously described, the closing of the second vehicle-side contactor may be initiated already upon movement of the dump body from the pivoted state towards the loading state. As the second vehicle-side contactor is closed, a charging current is enabled to flow from the charging contactor through both first and second vehicle-side contactors to the rechargeable energy storage system. However, it should be noted that for the previously described example with the first and second contactor parts (i.e. a first contactor part arranged on the dump body and a second contactor part arranged on the frame structure), as similar initiation timing of the second vehicle-side contactor may be enabled by arranging the first and second contactor parts in close proximity to the pivot joint. Hereby, already upon movement of the dump body from the pivoted state towards the loading state, the first and second contactor parts may be brought into contact.

Optionally in some examples, including in at least one preferred example, the first vehicle-side contactor is arranged on an external surface portion of the dump body, the external surface portion facing away from the frame structure when the dump body is arranged in the loading state. A technical benefit may include ease of alignment with the charging contactor of the overhead power line. Thus, by arranging the first vehicle-side contactor on an external surface portion of the dump body, the contactor may be brought into contact with the charging contactor by the positioning of the dump body.

Optionally in some examples, including in at least one preferred example, the first vehicle-side contactor is fixed in position relative to the dump body during pivoting of the dump body. A technical benefit may include predictable and reliable positioning of the first vehicle-side contactor during movement of the dump body. Hereby, the contact with the charging contactor of the overhead power line may be made predictable.

Optionally in some examples, including in at least one preferred example, the first vehicle-side contactor is arranged at or adjacent to the first end portion of the dump body. A technical benefit may include desired reach of the first vehicle-side contactor. Thus, as the first end portion of the dump body is reaching the highest elevation upon pivoting the dump body, the first vehicle-side contactor may more easily reach the charging contactor of the overhead power line, as compared to if the first vehicle-side contactor would be arranged at the second end portion of the dump body (i.e. closer to the pivot joint).

Optionally in some examples, including in at least one preferred example, the working machine is an autonomously controlled working machine. A technical benefit may include reduced, or occasionally even omitted, operator involvement. The autonomously controlled working machine may be configured for seamless integration with autonomous fleet operations.

Optionally in some examples, including in at least one preferred example, the working machine is configured to perform opportunity charging while in motion along a predefined path at the work site. A technical benefit may include continuous charging without halting operations. For example, the predefined path at the work site is associated with a transportation path between a dumping and loading location. Hereby, the downtime due to charging can be minimized.

Optionally in some examples, including in at least one preferred example, the rechargeable energy storage system is configured to power auxiliary equipment of the working machine in addition to the at least one electric traction machine. A technical benefit may include centralized power supply management. Hereby, electric system architecture may be simplified.

Optionally in some examples, including in at least one preferred example, the first vehicle-side contactor is arranged on a surface portion of the dump body that has a surface normal facing away from the working machine frame structure. A technical benefit may include improved accessibility and alignment with the overhead power line, particularly when the dump body is pivoted for engagement.

Optionally in some examples, including in at least one preferred example, the surface portion is located on a vertical upper portion of the dump body. A technical benefit may include better spatial compatibility with vertically elevated overhead power lines, and reduced risk of dirt accumulation or obstruction.

Optionally in some examples, including in at least one preferred example, the surface portion is arranged on a longitudinally opposite side of the dump body in comparison to the pivot joint. A technical benefit may include maximizing the vertical movement arc of the contactor area. Hereby, easy and reliable engagement with the overhead power line may be facilitated.

Optionally in some examples, including in at least one preferred example, the charging interface includes a conductive charge element configured to be brought into the charging state by mechanically connecting with the vertically elevated power source. A technical benefit may include a simple and robust conduction method through physical contact. Hereby complexity compared to wireless or inductive alternatives may be reduced.

Optionally in some examples, including in at least one preferred example, the pivoted state defines a maximum allowable inclination between the dump body and the frame structure. A technical benefit may include safe and consistent engagement positioning of the first vehicle-side contactor.

According to a second aspect of the disclosure, a method for charging a rechargeable energy storage system of a working machine configured for repetitive cyclic operation at a work site equipped with an overhead power line, the working machine comprising a dump body pivotably mounted to a working machine frame structure and comprising a first vehicle-side contactor, and a second vehicle-side contactor electrically connected in series with the rechargeable energy storage system and the first vehicle-side contactor, is provided. The method comprises: arranging the working machine at a predefined charging position at the work site; pivoting the dump body from a loading state, in which a second end portion of the dump body rests on the frame structure, to a pivoted state, in which the second end portion is raised relative to the frame structure, thereby bringing the first vehicle-side contactor into electrical contact with a charging contactor of the overhead power line; maintaining the second vehicle-side contactor in an open state during the electrical contact between the first vehicle-side contactor and the charging contactor; and returning the dump body from the pivoted state to the loading state, and closing the second vehicle-side contactor thereby allowing a charging current to flow from the charging contactor, through both the first and second vehicle-side contactors, to the rechargeable energy storage system. The second aspect of the disclosure may seek to solve the same problem as described for the first aspect of the disclosure. Thus, effects and features of the second aspect of the disclosure are largely analogous to those described above in connection with the first aspect of the disclosure, of which some are explicitly mentioned below typically without repeating the technical effect thereof. The pivoting of the dump body is typically initiated, or performed when the working machine is at the predefined charging position.

Optionally in some examples, including in at least one preferred example, the second vehicle-side contactor comprises a first contactor part arranged on the dump body and a second contactor part arranged on the frame structure, and wherein the closing of the second vehicle-side contactor occurs automatically by physical engagement of the first and second contactor parts as the dump body returns to the loading state. As described with reference to the first aspect, depending on the arrangement of the first and second contactor parts, physical engagement of the first and second contactor parts may occur during the movement of the dump body towards the loading state (e.g. if the first and second contactor parts are arranged close to the pivot j oint) or as the dump body arrives at the loading state.

Optionally in some examples, including in at least one preferred example, the first vehicle-side contactor is fixed in position relative to the dump body during pivoting of the dump body, and is arranged on an external surface portion of the dump body that faces away from the frame structure in the loading state.

Optionally in some examples, including in at least one preferred example, the working machine operates autonomously and the method further comprises: detecting a need to charge the rechargeable energy storage system based on a monitored state of charge; arranging the working machine at a predefined charging position at the work site by navigating the working machine to the predefined charging position; and initiating the pivoting of the dump body to engage the charging contactor in response to that the working machine is at the predefined charging position. A technical benefit may include enabling autonomous fleet-level charging coordination. For example, the working machine may be configured for self-managing the energy levels and charging of the rechargeable energy storage system without operator intervention.

According to a third aspect of the disclosure, a charging system is provided. The charging system comprises a working machine of the first aspect of the disclosure; and an overhead power line configured to supply electric power to the working machine, the overhead power line comprising a charging contactor configured to electrically connect with the first vehicle-side contactor of the working machine when the dump body is in the pivoted state. The third aspect of the disclosure may seek to solve the same problem as described for the first aspect of the disclosure. Thus, effects and features of the third aspect of the disclosure are largely analogous to those described above in connection with the first aspect of the disclosure, of which some are explicitly mentioned below typically without repeating the technical effect thereof.

Optionally in some examples, including in at least one preferred example, the overhead power line is stationary and the charging contactor is part of a sliding connector configured to remain in electrical contact with the first vehicle-side contactor while the working machine moves along a predefined path. A technical benefit may include continuous charging during vehicle motion. The use of a sliding contactor facilitates mechanical compatibility and adaptability to various overhead power lines. Moreover, a sliding contactor is particularly suitable for providing electric contactor between the overhead power line and the first vehicle-side contactor as the working machine is in motion.

Optionally in some examples, including in at least one preferred example, the overhead power line is arranged as a moveable looped conductor circulating along at least a part of the cyclic path of the working machine, and wherein the charging contactor is fixed relative to the overhead power line. A technical benefit may charging in motion for overhead power lines that itself follows the motion cycle of the working machine.

Optionally in some examples, including in at least one preferred example, the charging contactor includes a wear-resistant contact surface or roller interface to facilitate repeated contact with the first vehicle-side contactor. A technical benefit may include enhanced durability and contact quality between charging contactor and the first vehicle-side contactor. The roller interface or wear surface reduces degradation and supports long-term reliability.

Optionally in some examples, including in at least one preferred example, the overhead power line is supported by one or more auxiliary battery units or buffer capacitors to stabilize or supplement power delivery to the working machine. A technical benefit may include voltage stabilization, especially when multiple working machines are drawing power simultaneously or when the main power source fluctuates. The main power source may e.g. be the mains electricity grid.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

**FIG. 1** is an exemplary, partly schematic, side view of a vehicle having a dump body and an overhead power line configured to supply electric power to the working machine according to one example.
**FIG. 2** is an exemplary, partly schematic, side view of the vehicle of Fig. 1 when the dump body is arranged in a pivoted state according to one example.
**FIG. 3** is an exemplary, partly schematic, side view of the vehicle of Figs. 1-2 when the dump body is returned to a loading state according to one example.
**FIG. 4** is an exemplary, partly schematic, view of a charging system of a work site for which the working machine may be operated according to one example.
**FIG. 5** is a flow-chart for a method for charging a rechargeable energy storage system of a working machine according to one example.
**FIGs. 6a-6b** are exemplary, partly schematic, side view of a second vehicle-side contactor according to one example.

### DETAILED DESCRIPTION

The detailed description set forth below provides information and examples of the disclosed technology with sufficient detail to enable those skilled in the art to practice the disclosure.

The disclosed technology may solve the problem relating to inefficient charging processes and operational downtime in working machines, particularly those operating in repetitive cyclic conditions such as mining or construction sites. The disclosed technology utilizes a charging interface comprising a first and a second vehicle-side contactor, where the first vehicle-side contactor is configured to engage with a charging contactor of an overhead power line when the dump body of the working machine is pivoted, and the second vehicle-side contactor is configured to complete the vehicle-side charging circuit during or upon return of the dump body to its loading position. The sequential opening and closing of the vehicle-side contactors, governed by the mechanical position of the dump body, allows safe and efficient energy transfer from the overhead power line to the rechargeable energy storage system of the vehicle. A technical benefit may include enabling automatic and safe opportunity charging during normal machine operation, thereby avoiding productivity loss due to stationary charging. By decoupling the mechanical connection sequence of the working machine vis-à-vis the overhead power line from charging initiation of the rechargeable energy storage system, and thus ensuring that charging current only flows when the vehicle-side charging circuit is not broken (i.e. the full charging path is established), the system may reduce the risk of arcing and improve system robustness.

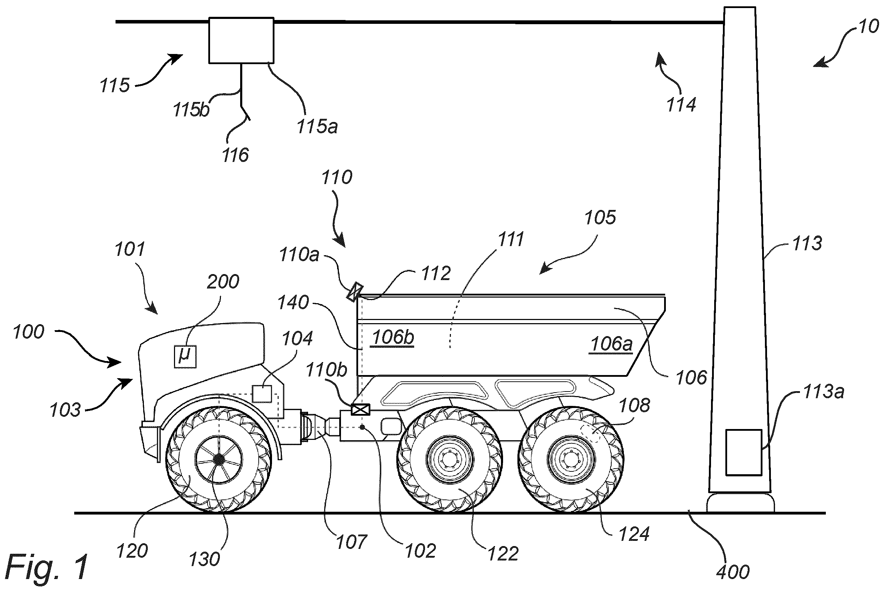

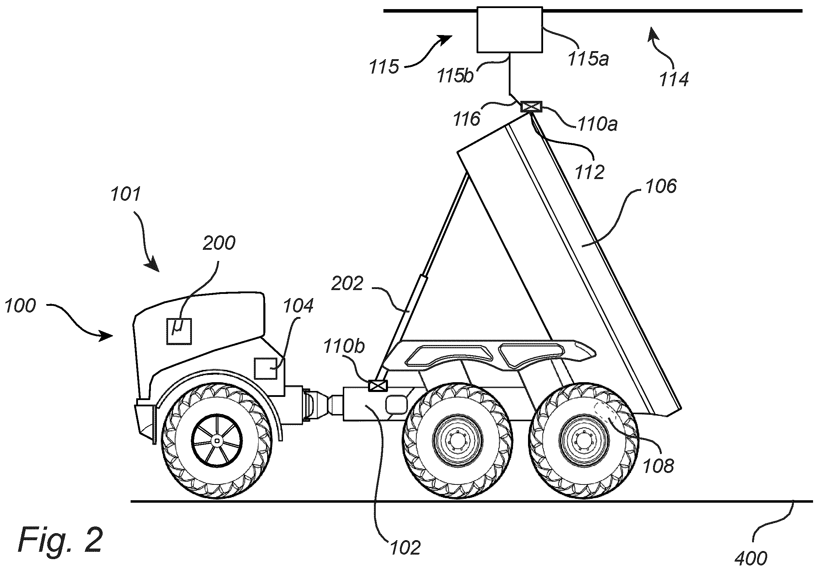

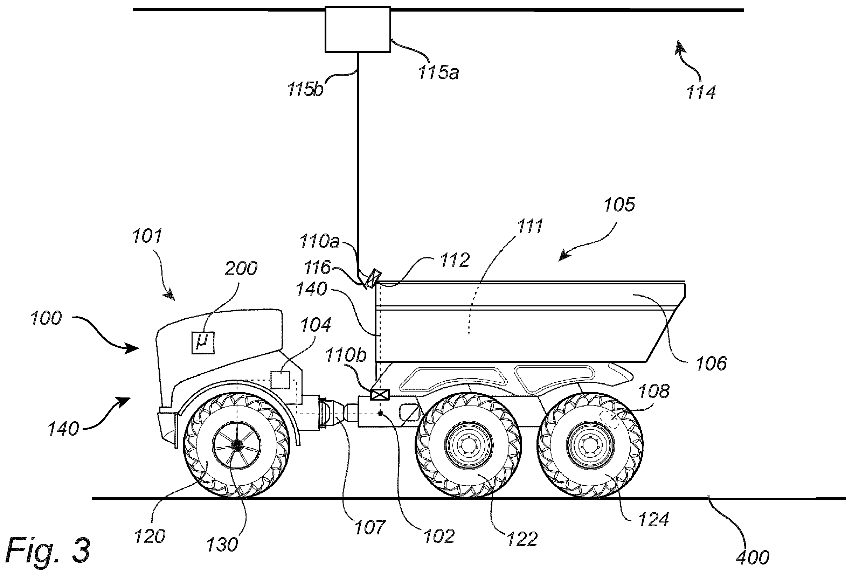

**FIG. 1** shows an exemplary vehicle in the form of a working machine 100, here exemplified as a dumper or dump truck 101 having a dump body 106. The working machine 100 may e.g. be an autonomously driven working machine, such as a full electric vehicle or a hybrid. In Fig. 1, a charging system 10 comprising an overhead power line 114 supported by at least one tower 113 is shown. The working machine 100 may be charged by the overhead power line 114, by pivoting the dump body 106, as shown in **FIGs. 2** **and** **3****.**

The working machine 100 comprises a front unit 103 and a rear unit 105, where the front 103 and rear 105 units are connected to each other by an articulation joint 107. The working machine 100 may thus also be referred to as an articulated dump truck, or an articulated hauler. The working machine 100 may however equally as well be arranged in the form of a fixed hauler where the front 103 and rear 105 units are fixed to each other. The working machine 100 is preferably operated at a working site, in particular a confined working site in the below described example when the working machine 100 is an autonomously driven working machine.

In the example, the front unit 103 comprises a pair of steerable wheels 120, while the rear unit 105 comprises a pair of frontmost rear wheels 122 and a pair of rearmost rear wheels 124. The pair of steerable wheels 120 of the front unit 103 are connected to an electric traction machine 130 arranged to propel the working machine 100. Although not depicted in Figs. 1-3, the pair of frontmost rear wheels 122 and/or the pair of rearmost rear wheels 124 may, as an alternative or as a complement, be provided with an electric machine for propulsion. Hence, the working machine 100 may be two-wheel driven, four-wheel driven and/or six-wheel driven. However, the following will only describe the working machine 100 with the electric traction machine 130 arranged on the steerable wheels 120 of the front unit 103. Further, the working machine 100 also comprises a rechargeable energy storage system 104 electrically connected to the electric traction machine 130 for supply of electric power to the electric traction machine 130. The rechargeable energy storage system 104 is preferably arranged in the form of one or more vehicle batteries or battery packs, and is in Figs. 1-3 exemplified as arranged on the front unit 103.

Further, the rear unit 105 comprises a working machine frame structure 102 carrying the dump body 106. The dump body 106 comprises an open box structure 111 configured to receive a load. The specific type of load may of course vary depending on the application of use, but can e.g. be mud, sand, rocks, gravel, etc. The dump body 106 is pivotably connected to the working machine frame structure 102 at a pivot joint 108 of the working machine frame structure 102. In more detail, the dump body 106 extends from a first end portion 106a, relatively far away from the front unit 103, to a second end portion 106b, relatively closer to the front unit 103. The dump body 106 is pivotably mounted to the frame structure 102 at the first end portion 106a by the pivot joint 108. By the pivot joint 108 and the pivotable function of the dump body 106, the dump body 106 is arrangeable in a loading state, in which the second end portion 106b of the dump body rests on the frame structure 102.

As seen in **FIG. 2****,** the working machine 100 has the dump body 106 in a pivoted state, in which the second end portion 106b is raised relative to the frame structure 102. Thus, the dump body 106 is pivoted about the pivot joint 108. Stated differently, the pivot joint 108 is arranged at a longitudinal rear end of the working machine 100, pivotably connecting a rear end 106a of the dump body 106 to a rear end of the frame structure 102 to each other. The dump body 106 is thus pivotable around a geometric axis extending laterally of the working machine 100. The dump body 106 is also connected to the working machine frame structure 102 at a longitudinal front end 106b, e.g. by an extendible and retractable cylinder 220. Thus, the dump body 106 of the working machine 100 may be arranged in at least two states: a first state where the dump body 106 is positioned in a load receiving state or a loading state (shown in Fig. 1), in which the cylinder 220 connecting the second end portion 106b of the dump body 106 to the working machine frame structure 102 is retracted (here, the dump body 106 can receive, and keep, material by the open box structure 111); and in a second sate where the dump body 106 is pivoted (shown in Fig. 2), in which the cylinder 220 connecting the second end portion 106b of the dump body 106 to the working machine frame structure 102 is extended or protracted (here, the dump body 106 can dump material by the open box structure 111).

When the dump body 106 is positioned in a loading state, the working machine 100 may be propelled and operated at the working site. Correspondingly, as will be described in the following, the working machine 100 may be propelled and operated at the working site when the dump body 106 is positioned in a pivoted state.

For charging the rechargeable energy storage system 104 using the overhead power line 114, the working machine 100 comprises a charging interface 110. The charging interface 110 is electrically connected to the rechargeable energy storage system 104, e.g. by means of a vehicle-side charging circuitry 140 including electric wiring. The charging interface 110 forms an electrical contact interface between the rechargeable energy storage system 104 and a power source, here being the overhead power line 114. In the example of Figs. 1-3, the overhead power line 114 is configured to, when connected to the charging interface 110 of the working machine, supply a charge/recharge current. In more detail, the charging interface 110 comprises a first vehicle-side contactor 110a mounted on the dump body 106 and being configured to establish electrical contact with a charging contactor 116 of the overhead power line 114 when the dump body 106 is arranged in the pivoted state.

As can be seen in Figs. 1 and 2, the first vehicle-side contactor 110a is arranged on the dump body 106. In further detail, the first vehicle-side contactor 110a is arranged on an external surface portion 112 of the dump body 106. The external surface portion 112 is facing away from the frame structure 102 when the dump body 106 is arranged in the loading state. The first vehicle-side contactor 110a is arranged at or adjacent to the first end portion 106a of the dump body 106. Preferably, the first vehicle-side contactor 110a is arranged on a vertical upper portion of the dump body 106 and at the second end portion 106b of the dump body 106, i.e. on a longitudinally opposite side of the dump body 106 compared to the pivot joint 108. Preferably, the first vehicle-side contactor 110a is electrically isolated from the dump body 106. Thus, when the first vehicle-side contactor 110a receives electric power from the overhead power line 114, electric power is prevented from being transmitted into the dump body 106. The electrical insulation may be obtained by using an electrically insulation material for connecting the first vehicle-side contactor 110a to the surface portion 112 of the dump body 106. As an alternative, the surface portion 112 of the dump body 106 may by itself be formed by an insulating material.

Furthermore, the first vehicle-side contactor 110a is fixed in position relative to the dump body 106 during pivoting of the dump body 106. The first vehicle-side contactor 110a is thus arranged stationary on the surface portion 112 relative to the dump body 106, and has a surface normal facing away from the working machine frame structure 102. Hence, the surface normal of the first vehicle-side contactor 110a is facing substantially vertically upwards and moves upwards and downwards by the upward and downward motion of the dump body 106.

Moreover, the charging interface 110 comprises a second vehicle-side contactor 110b arranged distant to the first vehicle-side contactor 110a and being electrically connected in series with the rechargeable energy storage system 104 and the first vehicle-side contactor 110a by the vehicle-side charging circuitry 140. The charging interface 110 is configured such that the second vehicle-side contactor 110b is in an open state when the dump body 106 is in the pivoted state, as in Fig. 2. With additional reference to **FIG. 3****,** the second vehicle-side contactor 110b is closed during or upon return movement of the dump body 106 to the loading state. Thus, the working machine 100, initially with its dump body 106 in its loading state shown in Fig. 1, is operated such the dump body 106 is moved into its pivoted state in which the first vehicle-side contactor 110a is brought into physical an electrical contact with charging contactor 116 of the overhead power line 114. At this state, shown in Fig. 2, the second vehicle-side contactor 110b is opened and thus breaks the vehicle-side charging circuitry 140 from the first vehicle-side contactor 110a to the rechargeable energy storage system 104, so no charging current can be supplied. As the dump body 106 is returned from the pivoted state to its loading state, as shown in Fig. 3, the first vehicle-side contact 110a remains in contact with the charging contact 116 of the overhead power line 114, and the second vehicle-side contactor 110b is closed to close the vehicle-side charging circuitry 140 from the first vehicle-side contactor 110a to the rechargeable energy storage system 104, so that a charging current can be supplied.

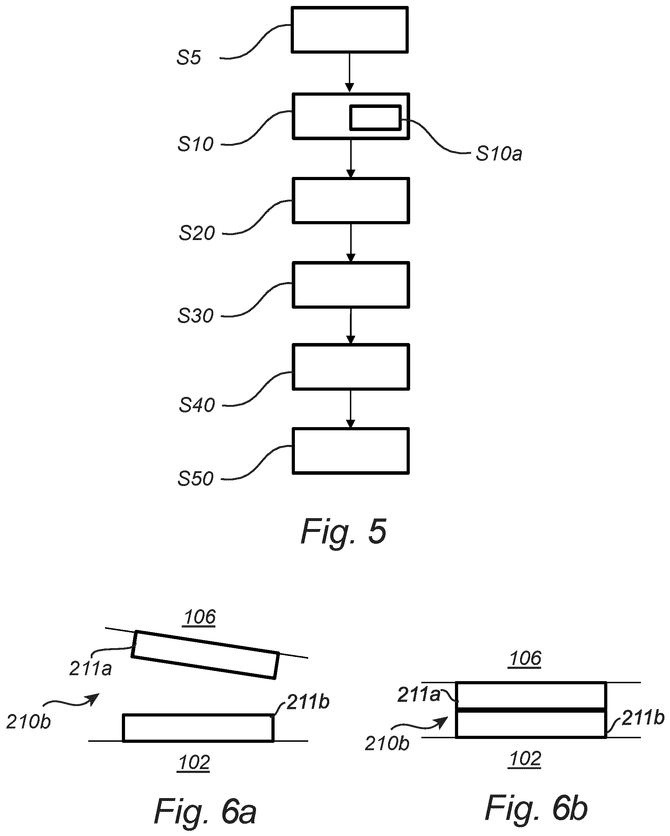

At least a portion of the second vehicle-side contactor 110b may be fixedly mounted to the frame structure 102. Turning briefly to **FIGs. 6a-6b****,** showing an example second vehicle-side contactor 210b which may be used in the charging interface 110 of the working machine 100 of Figs. 1-3, the second vehicle-side contactor 210b may comprises a first contactor part 211a arranged on the dump body 106 and a second contactor part 211b arranged on the frame structure 102. Such second vehicle-side contactor 210b is thus configured to be electrically closed when the first and second contactor parts 211a, 211b are brought into contact as the dump body 106 is returned to the loading state. Thus, in the pivoted state (as show in Fig. 2), the first and second contactor parts 211a, 211b are separated by a gap wherein the second vehicle-side contactor 210b is opened. Hence, no current can run through the second vehicle-side contactor 210b, and the vehicle-side charging circuitry 140 is thus broken and cannot supply a charging current from the charging contactor 116 to the rechargeable energy storage system 114. This is shown in Fig. 6a. As the dump body 106 is returned from the pivoted state to the loading state (as shown in Fig. 3), the first and second contactor parts 211a, 211b are brought together, wherein the second vehicle-side contactor 210b is closed. Hence, a charging current can run through the second vehicle-side contactor 210b, and the vehicle-side charging circuitry 140 is thus closed and can supply a charging current from the charging contactor 116 to the rechargeable energy storage system 114. This is shown in Fig. 6b.

In Figs. 1-3, the overhead power line 114 is a vertically elevated power source. Thus, the overhead power line 114 is vertically elevated relative to ground level 400 by means of the tower 113. The overhead power line 114 is configured to supply electric power to the working machine 100 by the charging contactor 116. The overhead power line 114 may be electrically power by the grid, such as the mains electricity grid. However, the overhead power line 114 may alternatively or additionally be supported by one or more auxiliary battery units or buffer capacitors, commonly shown schematically as a box 113a integrated into the tower 113 in Fig. 1, to stabilize or supplement power delivery to the working machine 100.

The charging contactor 116 is configured to electrically connect with the first vehicle-side contactor 110a of the working machine 100. As shown in Fig. 2, this is achieved when the dump body 106 is in the pivoted state. In the example, the overhead power line 114 may be stationary and the charging contactor 116 may form part of a sliding connector 115 configured to remain in electrical contact with the first vehicle-side contactor 110a while the working machine 100 moves. Moreover, the sliding connector 115 may comprise contact surface or roller interface 115a which is physical and electrical contact with the overhead power line 114. The contact surface or roller interface 115a may form a wear-resistant contact surface between the charging contactor 116 and the overhead power line 114 to facilitate repeated contact with the first vehicle-side contactor 110a.The sliding connector 115 may additionally or alternatively comprise a retractable wiring 115b physically and electrically connected to the charging contactor 116. Hereby, the first vehicle-side contactor 110a may be kept in physical and electrical contact with the charging contactor 116 even when the dump body 106 returns to its loading state.

As a further alternative, the overhead power line 114 may be arranged as a moveable looped conductor circulating along at least a part of the cyclic path of the working machine 100. In such example, the charging contactor 116 may be fixed relative to the overhead power line 114.

The working machine 100 may further comprises a control unit 200. The control unit 200 may be configured to control the open and closed states of the second vehicle-side contactor 110b. Thus, in addition to, or instead of, arranging the second vehicle-side contactor 210b in two parts 211a, 211b as previously described with reference to Figs. 6a and 6b, the opening and closing of the second vehicle-side contactor 110b may be actively managed by the control unit 200. The control unit 200 may be configured to: maintain the second vehicle-side contactor 110b in an open state while the first vehicle-side contactor 110a is brought into electrical contact with the charging contactor; and close the second vehicle-side contactor 110b during or upon return movement of the dump body 106 from the pivoted state to the loading state.

The working machine 100 is preferably an autonomously driven working machine and the control unit 200 may be further configured to operate the working machine 100, e.g. navigate the working machine 100, and control the operation of the electric machine 130. This is particularly depicted in Figs. 1-3, where the working machine 100 lacks an operator cabin. The control unit 200 may also be connected to the rechargeable energy storage system 104 for determining e.g. the state-of-charge level of the rechargeable energy storage system 104. The control unit 200 may also be configured to control the movement of dump body 106.

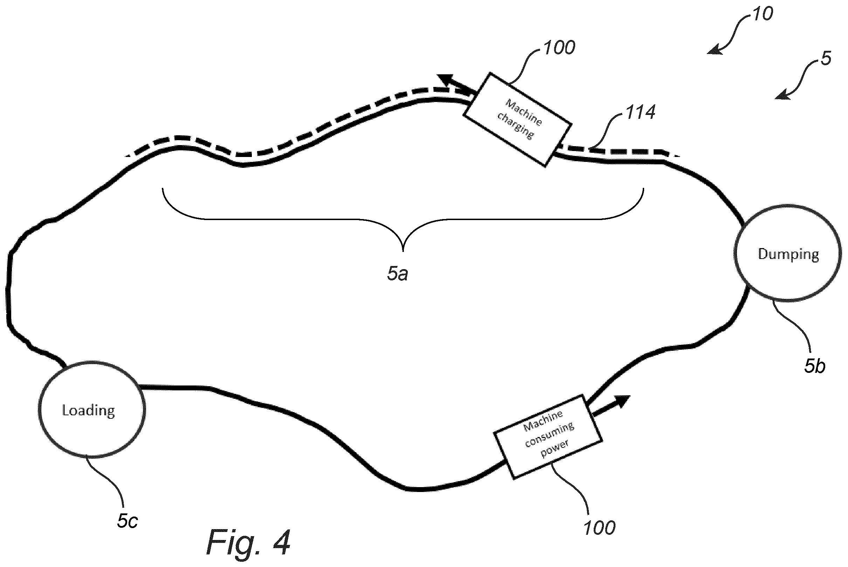

**FIG. 4** is a schematic illustration of a work site 5 for which the working machine 100 may be operated. The working machine 100 and the overhead power line 114 may form a charging system 10. The working machine 100 may e.g. be configured for repetitive cyclic operation at the work site 5 equipped with the overhead power line 114. Repetitive cyclic operation may be particularly suitable for a working machine which is an autonomously driven, or controlled, working machine 100 as previously described. As seen in Fig. 4, the working machine may be operated between a dumping site 5b and a loading site 5c. Thus, the working machine 100 may receive a load at the loading site 5c, move to the dumping site 5b for dumping the load, and then subsequently move back to the loading site 5c again. Here, the dump body 106 will be brought between its loading state and pivoted state respectively.

The working machine 100 may be configured to perform opportunity charging while in motion along a predefined path 5a at the work site 5. The predefined path 5a at the work site 5 is preferably associated with a transportation path between the dumping 5b and loading location 5c. Here, the dump body 106 will be empty, or almost empty, as the working machine 100 has dumped the load at the dumping site 5b. Thus, the dump body can be brought into the pivoted state in order to reach the charging contactor 116 of the overhead power line 114 without risking to dump material along the way. Hereby, the downtime due to charging can be minimized.

By performing such opportunity charging, there is no need, or at least a reduced need, to determine when the rechargeable energy storage system 104 is in need of charging.

Turning to **FIG. 5****,** schematically showing a flow-chart for a method for charging a rechargeable energy storage system 104 of a working machine 100. The working machine 100 may preferably be that described with reference to Figs 1-4, i.e. a working machine 100 configured for repetitive cyclic operation at a work site 5 equipped with an overhead power line 114, the working machine 100 comprising a dump body 106 pivotably mounted to a working machine frame structure 102 and comprising a first vehicle-side contactor 110a, and a second vehicle-side contactor 110b, 210b electrically connected in series with the rechargeable energy storage system 104 and the first vehicle-side contactor 110a.

In a first action or step S10, the working machine 100 is arranged at a predefined charging position at the work site. For example, the control unit 200 (typically comprising control circuitry) may be configured to, during an autonomously controlled operation of the vehicle, receive a signal indicative that the working machine is arranged at the predefined charging position. However, an according to at least some examples, the first action or step S10 may be preceded by a pre-action or pre-step S5 of detecting a need to charge the rechargeable energy storage system based on a monitored state of charge. In such case, the first action or step S10 of arranging the working machine 100 at the predefined charging position at the work site may be achieved by navigating S10a the working machine 100 to the predefined charging position.

In a second action or step S20, the dump body 106 is pivoted from a loading state, in which a second end portion 106b of the dump body 106 rests on the frame structure 102, to a pivoted state, in which the second end portion 106b is raised relative to the frame structure 102, thereby bringing the first vehicle-side contactor 110a into electrical contact with a charging contactor 116 of the overhead power line 114. For example, the control unit 200 may be configured to control the dump body 106 to tilt around the pivot joint 108. In particular, the control unit 200 may be configured to control the cylinder 202 to raise the second end portion 106b of the dump body 106. The dump body 106 is then rotated around the pivot joint 108 until the first vehicle-side contactor 110 is brought into electrical contact with the charging contactor 116. The second action or step S20 may typically be carried out in response to that the working machine is at the predefined charging position. The rechargeable energy storage system 104 may be configured to power the cylinder 202 of the dump body 106 in addition to powering the at least one electric traction machine 130.

In a third action or step S30, the second vehicle-side contactor 110b, 210b is maintained in an open state during the electrical contact between the first vehicle-side contactor 110a and the charging contactor 116.

In a fourth action or step S40, the dump body 106 is returned from the pivoted state to the loading state.

In a fifth action or step S50 the second vehicle-side contactor 110b, 210b is closed thereby allowing a charging current to flow from the charging contactor 116, through both the first and second vehicle-side contactors 110a, 110b, to the rechargeable energy storage system 104. As described with reference to Figs. 6a and 6b, the second vehicle-side contactor 210b may comprise a first contactor part 211a arranged on the dump body 106 and a second contactor part 211b arranged on the frame structure 102. Here, the closing of the second vehicle-side contactor 210b may occur automatically by physical engagement of the first and second contactor parts 211a, 211b as the dump body 106 returns to the loading state.

Example 1. A working machine configured for repetitive cyclic operation at a work site equipped with an overhead power line, the working machine comprising: a working machine frame structure; at least one electric traction machine configured to propel the working machine; a rechargeable energy storage system electrically connected to the at least one electric traction machine; a dump body extending from a first end portion to a second end portion and being configured to receive and dump a payload, and being pivotably mounted to the frame structure at the first end portion by a pivot joint, and being arrangeable in: a loading state, in which the second end portion of the dump body rests on the frame structure; and a pivoted state, in which the second end portion is raised relative to the frame structure by pivoting the dump body about the pivot j oint; a charging interface comprising: a first vehicle-side contactor mounted on the dump body and configured to establish electrical contact with a charging contactor of the overhead power line when the dump body is arranged in the pivoted state; a second vehicle-side contactor arranged distant to the first vehicle-side contactor and being electrically connected in series with the rechargeable energy storage system and the first vehicle-side contactor; wherein the charging interface is configured such that the second vehicle-side contactor is in an open state when the dump body is in the pivoted state, and is closed during or upon return movement of the dump body to the loading state.

Example 2. The working machine of example 1, wherein the second vehicle-side contactor comprises a first contactor part arranged on the dump body and a second contactor part arranged on the frame structure, the second vehicle-side contactor being configured to be electrically closed when the first and second contactor parts are brought into contact as the dump body is returned to the loading state.

Example 3. The working machine of any of examples 1-2, wherein at least a portion of the second vehicle-side contactor is fixedly mounted to the frame structure.

Example 4. The working machine of any of examples 1-3, further comprising a control unit configured to control the open and closed states of the second vehicle-side contactor.

Example 5. The working machine of example 4, wherein the control unit is configured to: maintain the second vehicle-side contactor in an open state while the first vehicle-side contactor is brought into electrical contact with the charging contactor; and close the second vehicle-side contactor during or upon return movement of the dump body from the pivoted state to the loading state.

Example 6. The working machine of any of examples 1-5, wherein the first vehicle-side contactor is arranged on an external surface portion of the dump body, the external surface portion facing away from the frame structure when the dump body is arranged in the loading state.

Example 7. The working machine of any of examples 1-6, wherein the first vehicle-side contactor is fixed in position relative to the dump body during pivoting of the dump body.

Example 8. The working machine of any of examples 1-7, wherein the first vehicle-side contactor is arranged at or adjacent to the first end portion of the dump body.

Example 9. The working machine of any of examples 1-8, wherein the working machine is an autonomously controlled working machine.

Example 10. The working machine of any of examples 1-9, wherein the working machine is configured to perform opportunity charging while in motion along a predefined path at the work site.

Example 11. The working machine of any of examples 1-10, wherein the rechargeable energy storage system is configured to power auxiliary equipment of the working machine in addition to the at least one electric traction machine.

Example 12. A method for charging a rechargeable energy storage system of a working machine configured for repetitive cyclic operation at a work site equipped with an overhead power line, the working machine comprising a dump body pivotably mounted to a working machine frame structure and comprising a first vehicle-side contactor, and a second vehicle-side contactor electrically connected in series with the rechargeable energy storage system and the first vehicle-side contactor, the method comprising: arranging the working machine at a predefined charging position at the work site; pivoting the dump body from a loading state, in which a second end portion of the dump body rests on the frame structure, to a pivoted state, in which the second end portion is raised relative to the frame structure, thereby bringing the first vehicle-side contactor into electrical contact with a charging contactor of the overhead power line; maintaining the second vehicle-side contactor in an open state during the electrical contact between the first vehicle-side contactor and the charging contactor; returning the dump body from the pivoted state to the loading state, and closing the second vehicle-side contactor thereby allowing a charging current to flow from the charging contactor, through both the first and second vehicle-side contactors, to the rechargeable energy storage system.

Example 13. The method of example 12, wherein the second vehicle-side contactor comprises a first contactor part arranged on the dump body and a second contactor part arranged on the frame structure, and wherein the closing of the second vehicle-side contactor occurs automatically by physical engagement of the first and second contactor parts as the dump body returns to the loading state.

Example 14. The method of any of examples 12-13, wherein the first vehicle-side contactor is fixed in position relative to the dump body during pivoting of the dump body, and is arranged on an external surface portion of the dump body that faces away from the frame structure in the loading state.

Example 15. The method of any of examples 12-14, wherein the working machine operates autonomously and the method further comprises: detecting a need to charge the rechargeable energy storage system based on a monitored state of charge; arranging the working machine at a predefined charging position at the work site by navigating the working machine to the predefined charging position; and initiating the pivoting of the dump body to engage the charging contactor in response to that the working machine is at the predefined charging position.

Example 16. A charging system comprising: a working machine of any of examples 1-11; and an overhead power line configured to supply electric power to the working machine, the overhead power line comprising a charging contactor configured to electrically connect with the first vehicle-side contactor of the working machine when the dump body is in the pivoted state.

Example 17. The charging system of example 16, wherein the overhead power line is stationary and the charging contactor is part of a sliding connector configured to remain in electrical contact with the first vehicle-side contactor while the working machine moves along a predefined path.

Example 18. The charging system of example 16, wherein the overhead power line is arranged as a moveable looped conductor circulating along at least a part of the cyclic path of the working machine, and wherein the charging contactor is fixed relative to the overhead power line.

Example 19. The charging system of any of examples 16-18, wherein the charging contactor includes a wear-resistant contact surface or roller interface to facilitate repeated contact with the first vehicle-side contactor.

Example 20. The charging system of any of examples 16-19, wherein the overhead power line is supported by one or more auxiliary battery units or buffer capacitors to stabilize or supplement power delivery to the working machine.

The operational actions described in any of the exemplary aspects herein are described to provide examples and discussion. The actions may be performed by hardware components, may be embodied in machine-executable instructions to cause a processor to perform the actions, or may be performed by a combination of hardware and software (e.g. in the control unit). Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A working machine (100) configured for repetitive cyclic operation at a work site (5) equipped with an overhead power line (114), the working machine comprising:
- a working machine frame structure (102);
- at least one electric traction machine (130) configured to propel the working machine;
- a rechargeable energy storage system (104) electrically connected to the at least one electric traction machine;
- a dump body (106) extending from a first end portion (106a) to a second end portion (106b) and being configured to receive and dump a payload, and being pivotably mounted to the frame structure at the first end portion by a pivot joint (108), and being arrangeable in: a loading state, in which the second end portion of the dump body rests on the frame structure; and a pivoted state, in which the second end portion is raised relative to the frame structure by pivoting the dump body about the pivot joint;
- a charging interface (110) comprising: a first vehicle-side contactor (110a) mounted on the dump body and configured to establish electrical contact with a charging contactor (116) of the overhead power line when the dump body is arranged in the pivoted state; a second vehicle-side contactor (110b, 210b) arranged distant to the first vehicle-side contactor (110a) and being electrically connected in series with the rechargeable energy storage system and the first vehicle-side contactor;
- wherein the charging interface is configured such that the second vehicle-side contactor (110b, 210b) is in an open state when the dump body is in the pivoted state, and is closed during or upon return movement of the dump body to the loading state.

2. The working machine (100) of claim 1, wherein the second vehicle-side contactor (210b) comprises a first contactor part (211a) arranged on the dump body (106) and a second contactor part (211b) arranged on the frame structure (102), the second vehicle-side contactor being configured to be electrically closed when the first and second contactor parts are brought into contact as the dump body is returned to the loading state.

3. The working machine (100) of any of claims 1-2, wherein at least a portion of the second vehicle-side contactor (110b, 210b) is fixedly mounted to the frame structure (102).

4. The working machine (100) of any of claims 1-3, further comprising a control unit (200) configured to control the open and closed states of the second vehicle-side contactor (110b).

5. The working machine (100) of claim 4, wherein the control unit is configured to: maintain the second vehicle-side contactor (110b) in an open state while the first vehicle-side contactor (110a) is brought into electrical contact with the charging contactor; and close the second vehicle-side contactor during or upon return movement of the dump body from the pivoted state to the loading state.

6. The working machine (100) of any of claims 1-5, wherein the first vehicle-side contactor (110a) is arranged on an external surface portion (112) of the dump body (106), the external surface portion facing away from the frame structure (102) when the dump body is arranged in the loading state.

7. The working machine (100) of any of claims 1-6, wherein the first vehicle-side contactor (110a) is fixed in position relative to the dump body (106) during pivoting of the dump body.

8. The working machine (100) of any of claims 1-7, wherein the first vehicle-side contactor (110a) is arranged at or adjacent to the first end portion (106a) of the dump body (106).

9. A method for charging a rechargeable energy storage system (104) of a working machine (100) configured for repetitive cyclic operation at a work site (5) equipped with an overhead power line (114), the working machine comprising a dump body (106) pivotably mounted to a working machine frame structure (102) and comprising a first vehicle-side contactor (110a), and a second vehicle-side contactor (110b, 210b) electrically connected in series with the rechargeable energy storage system and the first vehicle-side contactor, the method comprising:
- arranging (S10) the working machine at a predefined charging position at the work site;
- pivoting (S20) the dump body from a loading state, in which a second end portion of the dump body rests on the frame structure, to a pivoted state, in which the second end portion is raised relative to the frame structure, thereby bringing the first vehicle-side contactor into electrical contact with a charging contactor (116) of the overhead power line;
- maintaining (S30) the second vehicle-side contactor in an open state during the electrical contact between the first vehicle-side contactor and the charging contactor;
- returning (S40) the dump body from the pivoted state to the loading state, and closing (S50) the second vehicle-side contactor thereby allowing a charging current to flow from the charging contactor, through both the first and second vehicle-side contactors, to the rechargeable energy storage system.

10. The method of claim 9, wherein the working machine operates autonomously and the method further comprises:
- detecting (S5) a need to charge the rechargeable energy storage system based on a monitored state of charge;
- arranging (S10) the working machine at a predefined charging position at the work site by navigating (S10a) the working machine to the predefined charging position; and
- initiating the pivoting (S20) of the dump body to engage the charging contactor in response to that the working machine is at the predefined charging position.

11. A charging system (10) comprising:
- a working machine (100) of any of claims 1-8; and
an overhead power line (114) configured to supply electric power to the working machine, the overhead power line comprising a charging contactor (116) configured to electrically connect with the first vehicle-side contactor (110a) of the working machine when the dump body is in the pivoted state.

12. The charging system (10) of claim 11, wherein the overhead power line (114) is stationary and the charging contactor (116) is part of a sliding connector (115) configured to remain in electrical contact with the first vehicle-side contactor (110a) while the working machine moves along a predefined path (5a).

13. The charging system (10) of claim 11, wherein the overhead power line (114) is arranged as a moveable looped conductor circulating along at least a part of the cyclic path of the working machine, and wherein the charging contactor (116) is fixed relative to the overhead power line.

14. The charging system (10) of any of claims 11-13, wherein the charging contactor (116) includes a wear-resistant contact surface or roller interface to facilitate repeated contact with the first vehicle-side contactor (110a).

15. The charging system (10) of any of claims 11-14, wherein the overhead power line is supported by one or more auxiliary battery units (113a) or buffer capacitors to stabilize or supplement power delivery to the working machine.
